# FASCICULE DE BREVET EUROPEEN

(11) **EP 4 229 288 B1**
(45) Date de publication et mention de la délivrance du brevet: **07.08.2024**
(21) Numéro de dépôt: 21801592.3
(22) Date de dépôt: 05.10.2021
(51) Int. Cl.: F02C 7/22, F02C 7/236

(54) **CIRCUIT D'ALIMENTATION EN CARBURANT POUR UNE CHAMBRE DE COMBUSTION DE TURBOMACHINE**
KRAFTSTOFFVERSORGUNGSKREISLAUF FÜR EINE BRENNKAMMER EINER TURBOMASCHINE
FUEL SUPPLY CIRCUIT FOR A COMBUSTION CHAMBER OF A TURBOMACHINE

(30) Priorité: 14.10.2020 FR 2010482
(43) Date de publication de la demande: 23.08.2023
(73) Titulaire: SAFRAN AIRCRAFT ENGINES, 75015 Paris (FR)
(72) Inventeur: LE NORMAND, Kevin Didier Pierre, 77550 MOISSY-CRAMAYEL (FR); BRETTES, Frédéric, 77550 MOISSY-CRAMAYEL (FR); PORA, Loïc, 77550 MOISSY-CRAMAYEL (FR)
(74) Mandataire: Gevers & Orès
(86) Numéro de dépôt international: PCT/FR2021/051727
(87) Numéro de publication internationale: WO 2022/079371

(56) Documents cités:
- FR-A1- 2 999 653
- FR-A1- 3 080 437
- US-A- 3 511 259

## Description

### Domaine technique de l'invention

La présente invention concerne un circuit d'alimentation en carburant pour une chambre de combustion, notamment équipé d'un dispositif de distribution de flux de carburant destiné à leur mélange. L'invention vise également une turbomachine alimentée via ce circuit de carburant et en particulier une turbomachine d'aéronef.

### Arrière-plan technique

Une turbomachine, en particulier d'aéronef, comprend un générateur de gaz comportant notamment un ou plusieurs compresseurs, par exemple basse pression et haute pression, disposé(s) en amont d'une chambre de combustion.

Traditionnellement, la chambre de combustion est alimentée en air comprimé provenant du compresseur haute pression via notamment un diffuseur annulaire, et en carburant via un circuit d'alimentation en carburant comportant des injecteurs répartis angulairement autour d'un axe longitudinal de la turbomachine.

Le circuit de carburant peut comprendre les éléments suivants ici cités dans le sens de l'écoulement du carburant d'amont en aval :
- un réservoir de carburant pour le stockage du carburant,
- une pompe basse pression BP pour assurer l'alimentation du carburant issu du réservoir,
- une unité de filtration du carburant pour limiter (voire éliminer) les éléments contaminants le carburant en sortie de la pompe BP,
- une pompe haute pression HP,
- une unité de dosage, usuellement nommée FMU (pour « Fuel Metering Unit » suivant la terminologie anglosaxonne), et
- un ensemble d'injecteurs délivrant le flux total de carburant dans la chambre de combustion de la turbomachine.

De manière générale, les pompes BP et HP peuvent être solidaires et être entraînées par un même arbre de sortie d'un boîtier d'accessoire, de type AGB (pour « Accessory GearBox » suivant la terminologie anglosaxonne), de la turbomachine.

La pompe BP permet l'acheminement du carburant vers la pompe HP laquelle alimente l'unité de dosage en carburant avec un débit plus important que le besoin en carburant de la chambre de combustion.

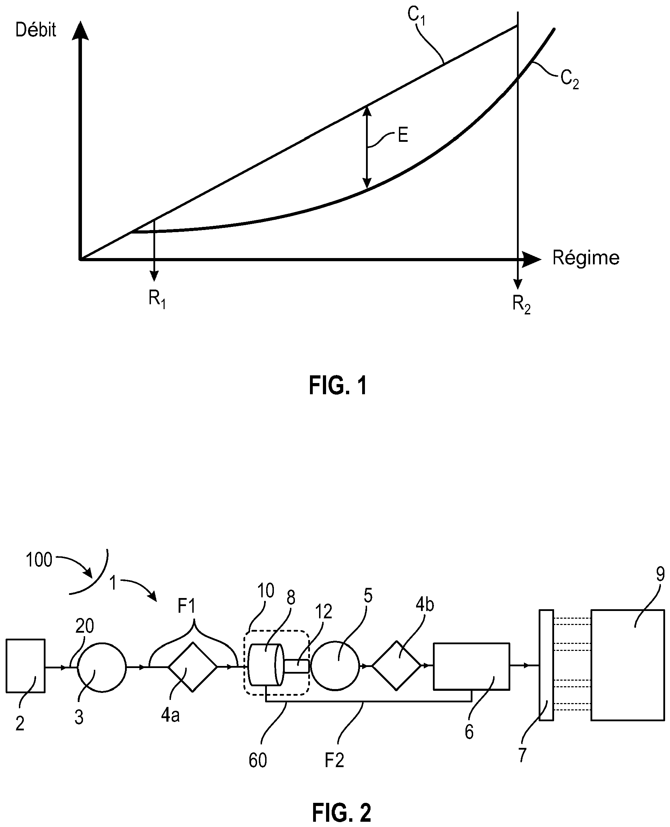

La figure 1 illustre schématiquement le débit (ou flux) en carburant injecté par la pompe HP du circuit d'alimentation en fonction des régimes du moteur à combustion de la turbomachine. La courbe C₁ linéaire représente une augmentation régulière du débit en carburant fourni par la pompe HP entre les régimes R₁ et R₂ de fonctionnement de la turbomachine. Le régime R₁ représente le débit en carburant au moment du démarrage ou pendant la phase auto-rotation (ou « Windmilling » suivant la terminologie anglosaxonne) en vol ou au sol de la turbomachine. Le régime R₂ représente le débit en carburant à un régime maximal de fonctionnement normal de la turbomachine (tel qu'au moment du décollage de l'aéronef). La courbe C₂ représente le besoin en carburant de la chambre de combustion pour fonctionner aux régimes R₁ et R₂. Cette courbe C₂ représente un débit en carburant répondant aux besoins de la chambre de combustion qui est bien inférieur au débit en carburant injecté par la pompe HP de la courbe C₁. La quantité de carburant en excès est représentée par une flèche E sur la figure 1.

Cette quantité de carburant en excès est remise en circulation dans le circuit d'alimentation en carburant. Pour cela, le circuit comprend également un canal de recirculation configuré pour retourner de l'unité de dosage FMU vers une entrée de la pompe HP, un second flux de carburant correspondant à la quantité de carburant excédentaire de l'unité de dosage.

Ainsi, le premier flux et le second flux de carburant se mélangent avant de rentrer dans la pompe HP. La sortie du canal de recirculation est généralement proche de l'entrée en carburant de la pompe HP pour notamment optimiser l'encombrement et l'espace dans la turbomachine. Cette configuration a pour principal inconvénient que les premier et second flux de carburant entrant dans la pompe HP ne sont pas parfaitement homogénéisés. Ceci peut générer une cavitation (c'est-à-dire des bulles) dans l'écoulement de carburant alimentant la pompe HP et qui peuvent endommager cette dernière. Ainsi, les performances de la pompe HP peuvent être dégradées et sa durée de vie limitée.

Il est connu de l'art antérieur un circuit d'alimentation en carburant pour une chambre de combustion d'une turbomachine d'aéronef comportant une boucle de recirculation d'une quantité excédentaire de carburant provenant d'une unité de dosage vers un réservoir de carburant ou une pompe à jet disposée en amont d'une pompe HP, tel que décrit respectivement dans les documents FR-A1-2999653 et WO-A1-2014/096620. Lorsque le carburant est renvoyé vers le réservoir, la question de l'homogénéisation du carburant en amont de la pompe HP ne se pose pas. En ce qui concerne la pompe à jet, celle-ci est apte à mélanger le premier flux de carburant provenant d'une pompe BP et le second flux provenant de l'unité de dosage pour alimenter en carburant la pompe HP. Cependant, la pompe à jet a pour inconvénient de nécessiter un montage compliqué et encombrant. Dans ce contexte, il est intéressant de pallier les inconvénients de l'art antérieur, en proposant un dispositif de distribution de plusieurs flux de carburant fiable s'intégrant dans un circuit d'alimentation en carburant d'une chambre de combustion, tout en permettant son assemblage simple et rapide dans une turbomachine.

### Résumé de l'invention

L'invention propose un circuit d'alimentation en carburant pour une chambre de combustion d'une turbomachine, en particulier d'aéronef, comprenant :
- un canal d'alimentation configuré pour la circulation d'un premier flux de carburant en provenance d'un réservoir de carburant ;
- une unité de dosage configurée pour fournir un débit prédéterminé de carburant dans la chambre de combustion ;
- au moins une pompe d'alimentation destinée à faire circuler le carburant du réservoir vers l'unité de dosage ;
- un canal de recirculation d'un second flux de carburant, correspondant à une quantité de carburant excédentaire provenant de l'unité de dosage, en amont de la pompe d'alimentation ;
- les canaux d'alimentation et de recirculation débouchant suivant des directions différentes en amont de la pompe d'alimentation.

Selon l'invention, le circuit comprend un dispositif de distribution d'au moins un des flux de carburant qui comporte un conduit interne d'écoulement du premier flux de carburant, une gorge annulaire externe d'écoulement du second flux de carburant et au moins un orifice de passage du second flux qui est en communication fluidique avec la gorge annulaire.

Selon l'invention, ledit au moins un orifice et ledit conduit interne sont coaxiaux et débouchent respectivement en amont de la pompe d'alimentation.

Ainsi, cette solution permet d'atteindre l'objectif susmentionné. En effet, une telle configuration permet de dissocier au moins deux flux de carburant provenant de directions différentes et de les orienter suivant une même direction par l'intermédiaire du dispositif de distribution de l'invention. Ceci permet de réaliser un mélange homogène et optimal de ces flux pour déboucher dans la pompe d'alimentation du circuit d'alimentation en carburant pour une chambre de combustion.

En particulier, les flux de carburant entrant dans le dispositif de distribution ont des débits différents et proviennent donc de canaux distincts et sécants en amont du dispositif (et par conséquent en amont de la pompe d'alimentation). Ces flux entrant dans le dispositif sont régulés par des conduits d'écoulement coaxiaux (à savoir le conduit d'écoulement interne du premier flux et l'au moins un orifice de passage du second flux), de façon à ce que les flux n'interfèrent pas entre eux pour former des turbulences et/ou des cavitations. Ainsi, les flux sortant du dispositif de distribution présentent l'avantage d'avoir un débit stable et donc d'être dans un état de repos. De cette façon, les flux à débit stable se mélangent en sortie du dispositif de distribution pour déboucher dans la pompe d'alimentation par un mélange homogène et sans cavitation. La pompe d'alimentation du circuit de l'invention n'est donc pas endommagée par les flux de carburant provenant des canaux d'alimentation et de recirculation du circuit. Ainsi, la durée de vie et les performances de la pompe d'alimentation sont grandement améliorées.

L'invention présente ainsi l'avantage de proposer une conception simple, offrant une très grande fiabilité, et peu pénalisante en termes de coûts et d'encombrement de la turbomachine.

Le circuit d'alimentation en carburant selon l'invention comprend également l'une ou plusieurs des caractéristiques suivantes, prises seules ou en combinaison :
- le canal d'alimentation débouche en aval dans le conduit interne d'écoulement du dispositif de distribution et le canal de recirculation débouche dans la gorge annulaire du dispositif de distribution ;
- le dispositif est monté dans un logement agencé en amont de la pompe d'alimentation, et dans lequel ledit au moins un d'orifice et ledit conduit interne débouchent dans une zone de mélange du logement ;
- les canaux d'alimentation et de recirculation sont configurés pour déboucher de manière sécante dans le logement, dans lequel une extrémité aval du canal d'alimentation débouche dans le conduit interne et une extrémité amont du canal de recirculation débouche dans la gorge annulaire externe ;
- l'extrémité aval du canal d'alimentation débouchant dans le conduit interne d'écoulement, s'étend sensiblement de façon axiale ou inclinée par rapport à l'axe A ;
- l'extrémité amont de canal de recirculation débouchant dans la gorge annulaire, s'étend sensiblement perpendiculaire ou inclinée par rapport à l'axe A ;
- le dispositif de distribution comprend un corps principal de révolution s'étendant autour d'un axe longitudinal et comportant :
   ▪ le conduit interne d'écoulement du premier flux de carburant qui s'étend à travers le corps principal suivant l'axe A, et
   ▪ une première portion annulaire configurée pour former un passage de sortie du second flux de carburant, et la première portion annulaire comportant ledit au moins un orifice de passage du second flux de carburant qui est répartie selon une rangée annulaire d'orifices autour de l'axe ;
- ledit au moins un orifice s'étend suivant un axe parallèle à l'axe du conduit interne ;
- ledit conduit interne d'écoulement et ledit au moins un orifice sont configurés pour déboucher de manière transversale à un axe autour duquel s'étend la pompe d'alimentation ;
- le corps principal comprend en outre une seconde portion annulaire configurée pour former un passage d'entrée du premier flux de carburant à travers le conduit interne, la seconde portion est reliée à la première portion via une portion intermédiaire délimitant au moins en partie l'ouverture centrale ;
- la seconde portion comprend en outre au moins une rainure annulaire d'étanchéité et de fixation configurée pour le montage d'un élément d'étanchéité ;
- la pompe d'alimentation du circuit de carburant comprend une pompe basse pression (par exemple de type rotodynamique) et/ou une pompe haute pression (par exemple de type volumétrique à engrenages) ;
- le logement et la zone de mélange sont agencés en amont de la pompe haute pression ;
- le conduit interne d'écoulement du premier flux de carburant est formé par une ouverture centrale.

La présente demande concerne en outre une turbomachine, en particulier d'aéronef, comprenant un circuit d'alimentation en carburant selon l'une des particularités de l'invention, pour une chambre de combustion de la turbomachine.

L'invention propose également un dispositif de distribution d'au moins un flux de carburant pour un circuit d'alimentation en carburant d'une chambre de combustion d'une turbomachine, en particulier d'aéronef, le dispositif comprenant un corps principal de révolution s'étendant autour d'un axe longitudinal A. Le corps principal comprend :
- un conduit interne d'écoulement d'un premier flux carburant et s'étendant à travers le corps principal suivant l'axe A, et
- une première portion annulaire configurée pour former un passage de sortie du second flux de carburant, et comprenant au moins un orifice de passage du second flux de carburant.

Le dispositif de distribution selon l'invention présente l'avantage d'assurer plusieurs fonctions au sein du circuit d'alimentation en carburant, à savoir :
- guider le premier flux de carburant provenant d'un canal d'alimentation du circuit (par exemple d'une première unité de filtration en référence à l'exemple décrite ci-après ou d'une pompe basse pression) ;
- guider le second flux de carburant provenant d'un canal de recirculation du circuit ;
- orienter les premier et second flux suivant une même direction (notamment par les conduits d'écoulement coaxiaux) ;
- étanchéifier le logement agencé dans au moins un des carters des composants du circuit de carburant (par exemple entre les carters de la première unité de filtrage et une pompe haute pression en référence à l'exemple décrit ci-après).

De plus, tel que décrit dans ce qui précède, le dispositif de distribution équipant le circuit de carburant permet donc de dissocier le premier flux et le second flux provenant de canaux de différentes directions, et de les orienter suivant une même direction en sortie du dispositif. Ceci permet de ralentir le débit de chacun des flux de carburant, de façon à limiter (voire supprimer) les turbulences et/ou les cavitations dans le carburant sortant du dispositif. De cette façon, le flux de carburant entrant dans une pompe d'alimentation du circuit est homogénéisé de façon optimale, notamment après passage dans une zone de mélange située entre la pompe d'alimentation et le dispositif.

Le dispositif de distribution selon l'invention comprend également l'une ou plusieurs des caractéristiques suivantes, prises seules ou en combinaison :
- le dispositif comprend une gorge annulaire externe qui est en communication fluidique avec l'au moins un orifice de la première portion ;
- ledit au moins un orifice de passage du second flux de carburant est réparti selon une rangée annulaire d'orifices ;
- la rangé annulaire d'orifices s'étend chacun suivant un axe parallèle à l'axe A ;
- le corps principal comprend en outre une seconde portion annulaire configurée pour former un passage d'entrée du premier flux de carburant à travers le conduit interne ;
- la seconde portion est reliée à la première portion via une portion intermédiaire du dispositif de distribution délimitant au moins en partie le conduit interne ;
- la seconde portion comprend une collerette annulaire s'étendant radialement autour de l'axe A ;
- la gorge annulaire est délimitée au moins en partie par un flanc de la collerette et une paroi de première portion ;
- la seconde portion comprend en outre au moins une rainure annulaire d'étanchéité et de fixation configurée pour le montage d'un élément d'étanchéité ;
- la première portion annulaire a un diamètre externe inférieur au diamètre externe de la collerette annulaire de la seconde portion annulaire ;
- chaque orifice de la rangée annulaire d'orifices a un diamètre comprise entre 3 et 10 mm, de préférence entre 5 et 7 mm, et encore préférentiellement d'environ 5, 5mm ;
- la rangée annulaire d'orifices comprend entre cinq à vingt orifices, de préférence entre quinze et vingt orifices, et encore préférentiellement d'environ dix-sept orifices.

La présente demande concerne en outre une turbomachine, en particulier d'aéronef, comprenant un dispositif de distribution d'au moins un flux de carburant selon l'une des particularités de l'invention, pour un circuit d'alimentation en carburant d'une chambre de combustion de la turbomachine.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig. 1] la figure 1 est un graphique schématique illustrant le débit en carburant fourni par une pompe haute pression d'un circuit d'alimentation en carburant et le débit en carburant requis par une chambre de combustion ;
[Fig. 2] la figure 2 est une vue très schématique d'un circuit d'alimentation en carburant pour une chambre de combustion d'une turbomachine selon l'invention ;
[Fig. 3] la figure 3 est une vue schématique en perspective du côté amont d'un dispositif de distribution d'au moins un flux de carburant du circuit de la figure 2 ;
[Fig. 4] la figure 4 est une vue schématique en perspective du côté aval du dispositif de distribution de la figure 3 ;
[Fig. 5] la figure 5 est une vue schématique en coupe du dispositif de distribution de la figure 4 ; et
[Fig. 6] la figure 6 est une vue schématique agrandie et en coupe de l'agencement du dispositif de distribution des figures 3 à 5 dans le circuit d'alimentation de la figure 2.

### Description détaillée de l'invention

Par convention, dans la description ci-après, les termes « longitudinal » et « axial » qualifient l'orientation d'éléments structurels s'étendant selon la direction d'un axe longitudinal X. Cet axe X peut être confondu avec un axe de rotation d'un rotor d'une turbomachine. Les termes « radial » ou « vertical » qualifient une orientation d'éléments structurels s'étendant selon une direction perpendiculaire à l'axe X. Les termes « intérieur » et « extérieur », et « interne » et « externe » sont utilisés en référence à un positionnement par rapport à l'axe X. Ainsi, un élément structurel s'étendant selon l'axe X comporte une face intérieure tournée vers l'axe X et une surface extérieure, opposée à sa surface intérieure. Dans la présente demande, les termes « amont » et « aval » sont définis par rapport au sens de circulation des gaz dans la turbomachine.

La figure 1 a été décrite dans ce qui précède.

L'invention s'applique à une turbomachine 100, en particulier d'aéronef, comportant un générateur de gaz ou moteur. Une telle turbomachine peut être un turbopropulseur, un turboréacteur ou un turbomoteur. Le générateur de gaz de la turbomachine comprend typiquement un ou plusieurs compresseurs, par exemple basse pression et haute pression, disposé(s) en amont d'une chambre de combustion 9.

La chambre de combustion 9 est alimentée en air comprimé provenant du compresseur haute pression via notamment un diffuseur annulaire, et en carburant via un circuit d'alimentation en carburant 1 comportant des injecteurs répartis angulairement autour d'un axe longitudinal X de la turbomachine.

Le circuit d'alimentation en carburant 1 (ou circuit de carburant 1 dans la présente demande) de la figure 2 peut comprendre les éléments suivants ici cités dans le sens de l'écoulement du carburant d'amont en aval :
- un réservoir de carburant 2 pour le stockage du carburant,
- une pompe basse pression BP 3, par exemple de type rotodynamique (tel qu'une pompe centrifuge permettant de pomper et d'évacuer un fluide par rotation d'un rotor ou d'une roue à hélice) pour assurer l'alimentation du carburant issu du réservoir 2,
- une première unité de filtration 4a du carburant pour limiter (voire éliminer) les éléments contaminants le carburant en sortie de la pompe BP 3,
- une pompe haute pression HP 5, par exemple de type volumétrique à engrenages,
- une seconde unité de filtration 4b du carburant pour limiter (voire éliminer) les éléments contaminants le carburant en sortie de la pompe HP 5,
- une unité de dosage 6 pour délivrer en sortie un flux total de carburant réparti vers la chambre de combustion 9, et
- un ensemble d'injecteurs 7 délivrant un flux total de carburant dans la chambre de combustion 9 de la turbomachine 100.

Les pompes BP 3 et HP 4 peuvent être solidaires et être entraînées par un même arbre de sortie d'un boîtier d'accessoire (non représenté sur la figure), par exemple de type AGB, de la turbomachine 100. Ceci permet notamment d'adapter le débit envoyé par les pompes BP 3 et HP 5 aux besoins de la chambre de combustion 9.

La pompe BP 3 alimente la première unité de filtration 4a et la pompe HP 5 d'un premier flux de carburant F1 provenant du réservoir 2 par l'intermédiaire d'un canal d'alimentation 20. La pompe HP 5 alimente la seconde unité de filtration 4b et l'unité de dosage 6 en carburant, par exemple par l'intermédiaire du canal d'alimentation 20, avec un débit plus important que le besoin en carburant de la chambre de combustion 9.

Tel que décrit dans ce qui précède, une quantité de carburant en excès est remise en circulation dans le circuit de carburant 1 par l'intermédiaire d'un canal de recirculation 60. Ce canal de recirculation 60 est configuré pour retourner en amont de la pompe HP 5, un second flux de carburant F2 correspondant à la quantité de carburant excédentaire de l'unité de dosage 6.

Ainsi, le premier flux F1 et le second flux F2 de carburant se mélangent avant de rentrer dans la pompe HP 5.

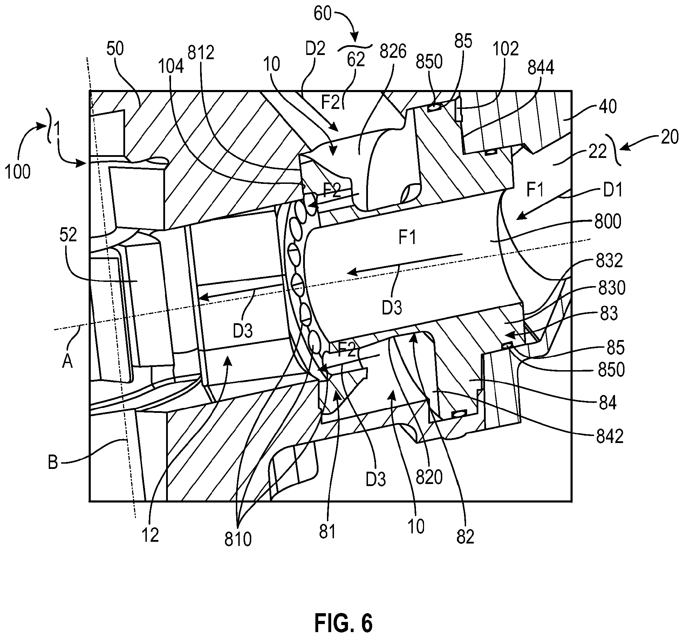

Sur l'exemple de la figure 2, les canaux 20, 60 débouchent suivant des directions D1, D2 (illustrées sur la figure 6) différentes en amont de la pompe HP 5.

L'une des particularités de l'invention réside dans le fait que le circuit de carburant 1 comprend également un dispositif de distribution 8 de carburant. Ce dispositif de distribution 8 peut être assemblé de façon amovible en amont de la pompe HP 5.

Sur la figure 2 et de manière non-limitative, le dispositif de distribution 8 est situé dans un logement 10 du circuit 1. Le dispositif 8 et le logement 10 sont situés en aval de la première unité de filtration 4a et en amont de la pompe HP 5. Le logement 10 peut présenter une forme générale au moins en partie complémentaire avec la forme générale du dispositif de distribution 8.

Dans le cas du circuit de carburant 1, le dispositif de distribution 8 est configuré pour canaliser et d'assurer un mélange homogène des premier F1 et second F2 flux de carburant provenant, respectivement, du canal d'alimentation 20 et du canal de recirculation 60.

Les canaux 20, 60 sont configurés pour déboucher de manière sécante dans le logement 10 (et par conséquent dans le dispositif 8).

Par ailleurs, le logement 10 comprend une zone de mélange 12 des flux de carburant F1, F2 sortant du dispositif de distribution 8. Sur la figure 2, la zone de mélange 12 est située en aval du dispositif de distribution 8 et en amont de la pompe HP 5.

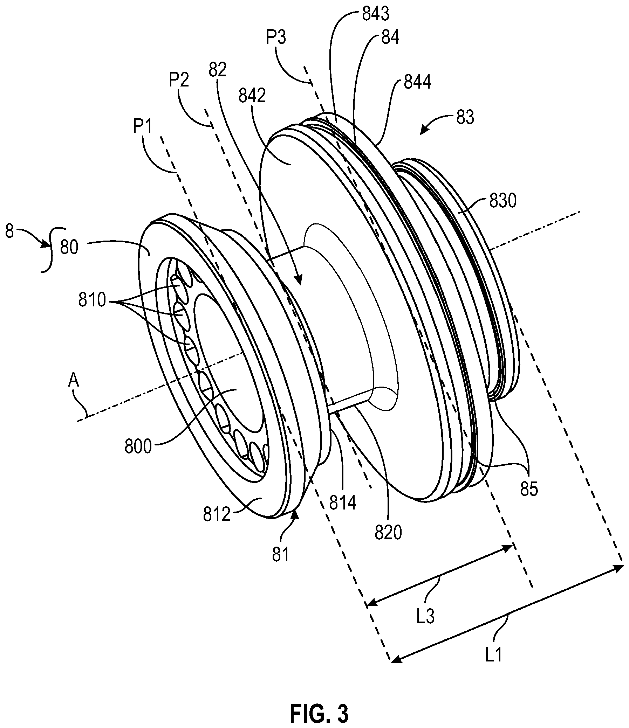

En référence aux figures 3 à 5, nous allons maintenant décrire le dispositif de distribution de carburant 8 équipant le circuit de carburant 1.

Le dispositif de distribution 8 présente une forme de révolution s'étendant autour d'un axe longitudinal A. L'axe A peut être sensiblement parallèle ou incliné par rapport à l'axe X de la turbomachine 100. Le dispositif de distribution 8 comprend un corps principal 80 de forme générale allongée et s'étendant autour de l'axe A.

Dans l'exemple des figures 3 à 5, le corps principal 80 comprend une première portion annulaire 81, une seconde portion annulaire 83 qui est opposée (suivant l'axe A) à la première portion 81, et une portion intermédiaire 82 qui relie les portions annulaires 81, 83 entre elles. Avantageusement, les portions 81, 82, 83 sont formées d'une seule pièce (venue de matière).

Le corps principal 80 comprend en outre un conduit interne d'écoulement 800 s'étendant suivant l'axe A. Ce conduit interne 800 peut présenter une forme cylindrique. Le conduit interne 800 peut être formé par une ouverture centrale et traversante. Sur l'exemple, l'ouverture du conduit interne 800 présente une section transversale circulaire. L'ouverture du conduit interne 800 peut présenter un diamètre D₈₀₀ compris entre 10 et 50 mm, de préférence entre 20 et 30 mm. Encore plus préférentiellement, le diamètre D₈₀₀ est d'environ 26 mm. Sur la figure 3, l'ouverture centrale 800 présente une longueur L1 comprise sensiblement entre 20 et 50 mm. Avantageusement, la longueur L1 est comprise entre 25 et 30 mm.

Sur l'exemple, l'ouverture du conduit interne 800 forme un passage d'entrée de carburant qui est situé du côté de la seconde portion 83 et un passage de sortie de carburant qui est situé du côté de la première portion 81. Plus particulièrement, l'ouverture du conduit interne 800 débouche sur une paroi avant 812 de la première portion 81 et une paroi arrière 832 d'une extrémité arrière 830 de la seconde portion 83.

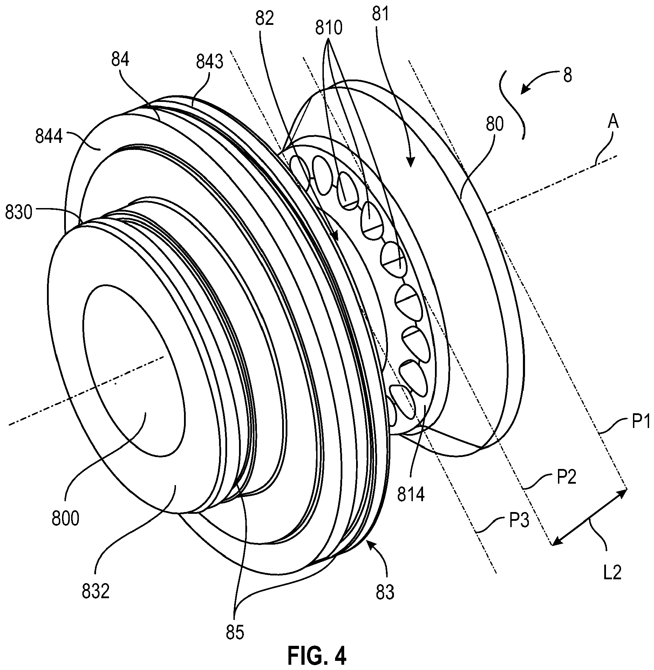

La première portion 81 comprend la paroi avant 812 et une paroi arrière 814 qui sont sensiblement transversales à l'axe A. La paroi avant 812 passe sensiblement par un plan P1 et la paroi arrière 814 passe sensiblement par un plan P2. Sur les figures 3 et 4, les plans P1 et P2 sont sensiblement perpendiculaires à l'axe A. Par ailleurs, sur l'exemple, la première portion 81 présente une surface externe annulaire qui est rétrécie en direction du plan P2.

La première portion 81 comprend en outre au moins un orifice 810. Cet orifice 810 est configuré pour le passage de carburant. Sur l'exemple des figures 3 à 5 et de façon non-limitative, la première portion 81 comprend une rangée annulaire d'orifices 810 s'étendant circonférentiellement autour de l'axe A. Chacun des orifices 810 de la rangée annulaire d'orifices est traversant et s'étend axialement entre les plans P1 et P2. Sur la figure 4 et de façon non-limitative, la longueur L2 entre les plans P1 et P2 (correspondant sensiblement respectivement entre la paroi avant 812 et la paroi arrière 814) est comprise entre 5 et 15 mm, de préférence d'environ 8 mm. Chacun des orifices 810 peut s'étendre également sensiblement parallèle à l'ouverture centrale du conduit interne 800. La rangée annulaire d'orifices comprend entre cinq à vingt orifices, de préférence entre quinze et vingt orifices. Encore préférentiellement, il y a environ dix-sept orifices. Chaque orifice 810 de la rangée annulaire d'orifices a un diamètre D₈₁₀ compris entre 3 et 10 mm, de préférence entre 5 et 7 mm, et encore préférentiellement d'environ 5, 5 mm. L'ouverture du conduit interne 800 et les orifices 810 sont coaxiaux, notamment par rapport à l'axe A. La première portion 81 est configurée pour former un passage de sortie de carburant. La rangée annulaire d'orifices est configurée pour former à la fois un passage d'entrée du carburant et un passage de sortie de carburant.

La portion intermédiaire 82 délimite entre les première 81 et seconde 83 portions une gorge annulaire 820. Ainsi, sur l'exemple, la gorge annulaire 820 s'étend d'avant en arrière entre le plan P2 et un plan P3. Le plan P3 est sensiblement parallèle aux plans P1 et P2. Sur la figure 3 et de façon non-limitative, la longueur L3 entre les plans P1 et P3 (correspondant sensiblement respectivement entre la paroi avant 812 de la première portion 81 et une extrémité de la portion intermédiaire 82 qui est opposée à la paroi 812) est comprise entre 15 et 30 mm, de préférence d'environ 21 mm. Cette gorge annulaire 820 est en communication fluidique avec les orifices 810 de la première portion 81. La gorge annulaire 820 est configurée pour former un passage d'entrée de carburant.

La seconde portion 83 comprend une collerette annulaire 84 s'étendant radialement vers l'extérieur et autour de l'axe A. La collerette annulaire 84 est située du côté de la portion intermédiaire 82. La collerette annulaire 84 présente un flanc avant 842 et un flanc arrière 844 qui est opposé axialement au flanc avant 842. Les flancs 842, 844 sont reliés par une surface annulaire périphérique 843. Sur l'exemple, le flanc avant 842 est défini sensiblement dans le plan P3.

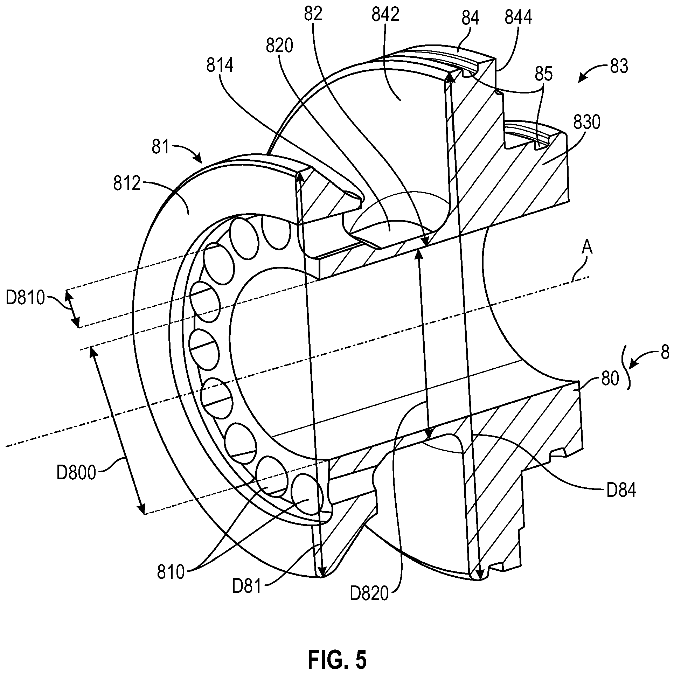

La seconde portion 83 comprend également au moins une rainure annulaire 85, dite d'étanchéité et de fixation, s'étendant autour de l'axe A. La rainure annulaire 85 d'étanchéité et de fixation est configurée pour le montage d'un élément d'étanchéité 850. En particulier, sur l'exemple, celle-ci présente une section axiale en U et débouche sur la surface périphérique annulaire 843. Avantageusement, cet élément d'étanchéité 850 est un joint torique (illustré sur la figure 6). De manière similaire, sur l'exemple, l'extrémité arrière 830 peut également comprendre la rainure annulaire 85 qui peut avoir une section axiale en U et déboucher sur une surface périphérique annulaire de l'extrémité arrière 830. Sur la figure 5, la seconde portion 83 comprend deux rainures annulaires 85 agencées, respectivement, sur la collerette annulaire 84 et sur l'extrémité arrière 830 qui est opposée (suivant l'axe A) à la collerette annulaire 84.

Sur l'exemple, la collerette annulaire 84 présente un diamètre externe D₈₄ (délimité par la surface périphérique externe 843) supérieure au diamètre externe de l'extrémité arrière 830 de la seconde portion 83.

La seconde portion 83 est configurée pour former un passage d'entrée de carburant. Sur l'exemple, le diamètre externe D₈₄ de la collerette annulaire 84 est supérieur au diamètre externe D₈₁ de la première portion 81. Le diamètre externe D₈₁ de la première portion 81 est supérieur au diamètre externe D₈₂₀ de la gorge annulaire 820.

Nous allons maintenant décrire le dispositif de distribution 8 équipé dans le circuit de carburant 1 de l'invention.

En référence aux figures 2 et 6 et non-limitativement, le dispositif de distribution 8 est assemblé dans le logement 10 agencé en aval de la première unité de filtrage 4a et en amont de la pompe HP 5.

La pompe HP 5 peut être de type volumétrique à engrenages. Dans ce cas, la pompe HP 5 peut comprendre un ou plusieurs roues dentées 52. La roue dentée 52 présente un axe de rotation B, telle qu'illustrée sur la figure 6. Cet axe B est sensiblement perpendiculaire à l'axe A du dispositif 8.

Le logement 10 présente une forme générale cylindrique s'étendant suivant un axe de révolution. Sur la figure 6, cet axe de révolution du logement 10 coïncide sensiblement avec l'axe A du dispositif de distribution 8. Le logement 10 peut être formé par les parois d'au moins un des carters 40, 50 et/ou d'au moins un des canaux 20, 60 du circuit de carburant 1. Sur l'exemple et de manière non-limitative, le logement 10 est situé au moins en partie entre les carters 40, 50 de la première unité de filtrage 4a et de la pompe HP 5. Sur la figure 6, le logement 10 débouche au moins en partie radialement dans le canal de recirculation 60. De plus, le logement 10 débouche en amont dans le canal d'alimentation 20 et en aval dans la zone de mélange 12 du circuit de carburant 1.

La zone de mélange 12 présente une forme générale annulaire ou cylindrique. Sur l'exemple, cette zone de mélange 12 peut également s'étendre suivant un axe longitudinal qui coïncide avec l'axe de révolution du logement 10 et de l'axe A du dispositif de distribution 8.

Sur la figure 6, la zone de mélange 12 débouche ainsi en amont dans le logement 10 (et également la première portion 81 du dispositif de distribution 8 installé dans le logement 10), et en aval dans la pompe HP 5 (par exemple dans les engrenages de la roue dentée 52 de la pompe HP 5).

Sur la figure 6, la paroi avant 812 de la première portion 81 du dispositif de distribution 8 est en appui contre, une paroi amont 102 du logement 10. Sur l'exemple, le logement 10 peut correspondre à une paroi du carter 50 de la pompe HP 5. Le flanc avant 842 de la collerette annulaire 84 du dispositif de distribution 8 est en appui contre une paroi aval 104 du logement 10. Sur l'exemple, le carter 40 de la première unité de filtrage 4a porte la paroi aval 104.

Sur l'exemple, des joints toriques 850 sont installés entre les rainures 85 du dispositif de distribution 8 et des surfaces annulaires internes des carters 40, 50. Ces joints toriques sont suffisants pour maintenir de façon fixe et étanche le dispositif de distribution 8 dans le logement 10.

Le canal d'alimentation 20 du circuit 1 comprend une sortie amont 22 qui débouche dans l'ouverture centrale 800 du côté de la seconde portion 83, en amont du dispositif de distribution 8. La sortie amont 22 est orientée suivant une direction s'étendant sensiblement de façon inclinée ou axiale par rapport à l'axe A.

Le canal de recirculation 60 du circuit 1 comprend une sortie amont 62 débouchant dans le logement 10, en particulier dans la gorge annulaire 820 de la portion intermédiaire 82. La sortie aval 62 est orientée suivant une direction s'étendant sensiblement transversalement par rapport à l'axe A. En particulier, la direction de sortie est perpendiculaire ou inclinée (avec un angle comprise entre 20 et 50°) par rapport à l'axe A.

En référence à la figure 6, le premier flux de carburant F1 provient du canal d'alimentation 20 suivant une première direction D1, et le second flux de carburant F2 provient du canal de recirculation 60 suivant une seconde direction D2.

Le premier flux de carburant F1 traverse l'ouverture centrale du conduit 800 du dispositif de distribution 8 pour déboucher dans la zone de mélange 12 puis dans la pompe HP 5. Ceci permet au premier flux F1 de s'écouler à l'intérieur et en sortie du dispositif de distribution 8 suivant une troisième direction D3. Cette troisième direction D3 est coaxiale avec l'axe A et également avec les axes de révolution de la zone de mélange 12 et du logement 10. La direction D3 d'écoulement du premier flux F1 peut être différente à la première direction D1 lorsque la sortie amont 22 débouche de façon inclinée par rapport à l'axe A (telle qu'illustrée sur la figure 6), ou coaxiale à la direction D1 lorsque la sortie amont 22 débouche de façon axiale à l'axe A.

Avantageusement, le premier flux F1 selon la troisième direction D3 débouche sensiblement perpendiculaire à l'axe B de la roue dentée 52 de la pompe HP 5.

Les parois formées dans le logement 10, par l'extrémité amont 62 et la gorge annulaire 820, forment une chambre annulaire 826 dans laquelle le second flux de carburant F2 entre dans le dispositif de distribution 8. Le second flux F2 passe ensuite à travers les orifices 810 de la première portion 81 pour déboucher dans la zone de mélange 12 puis dans la pompe HP 5. Ceci permet au second flux F2 de s'écouler à l'intérieur et en sortie du dispositif de distribution 8 suivant la troisième direction D3 également. Sur l'exemple, cette direction D3 d'écoulement du second flux F2 est différente de la seconde direction D2.

Dans la chambre annulaire 826, le second flux F2 est freiné par rapport à sa vitesse dans le canal de recirculation 60. Ceci permet au second flux F2 de passer d'un état turbulent dans le canal de recirculation 60 à un état laminaire dans les orifices 810, puis dans la zone de mélange 12.

Nous comprenons que le dispositif de distribution de l'invention est situé à la confluence des sorties des premier et deuxième flux F1, F2 et que les flux se mélangent à la sortie du dispositif de distribution.

Ainsi, les flux de carburant F1, F2 débouchant dans la zone de mélange 12 ne présentent pas ou très peu de cavitations avant de rentrer dans la pompe HP 5. Dans la zone de mélange 12, les flux de carburant F1, F2 sont rendus homogènes pour leurs écoulements dans la pompe HP 5.

Dans la présente demande, le dispositif de distribution est décrit pour la distribution ou la canalisation de carburant pour un circuit d'alimentation en carburant d'une chambre de combustion d'une turbomachine, en particulier d'aéronef. Le dispositif de distribution de l'invention peut aussi s'adapter pour tout type de fluide et pour des systèmes hydromécaniques de turbomachine autre que le domaine de l'aéronautique.

Le dispositif de distribution de carburant équipant le circuit d'alimentation en carburant selon l'invention apporte plusieurs avantages qui sont notamment de :
- optimiser le mélange et l'homogénéisation des flux de carburant provenant des canaux d'alimentation et de recirculation sécants et non-coaxiaux, en amont de la pompe d'alimentation,
- proposer un dispositif de distribution et de mélange dans l'encombrement et l'espace disponible du circuit de carburant,
- optimiser la durée de vie de la pompe d'alimentation en empêchant la formation de cavitations dans le carburant,
- s'attacher et se détacher facilement du circuit d'alimentation,
- limiter le coût de maintenance d'une pompe d'alimentation du circuit de carburant, et
- s'adapter facilement aux générateurs de gaz existants.

Globalement, cette solution proposée est simple, efficace et économique à réaliser et à assembler sur une turbomachine, tout en assurant une alimentation en carburant optimale et une durée de vie améliorée d'au moins un des composants d'un circuit d'alimentation en carburant pour une chambre de combustion d'une turbomachine.

## Revendications

1. Circuit d'alimentation (1) en carburant pour une chambre de combustion (9) d'une turbomachine (100), en particulier d'aéronef, comprenant :
- un canal d'alimentation (20) configuré pour la circulation d'un premier flux de carburant (F1) en provenance d'un réservoir de carburant (2) ;
- une unité de dosage (6) configurée pour fournir un débit prédéterminé de carburant dans la chambre de combustion (9) ;
- au moins une pompe d'alimentation (3, 5) destinée à faire circuler le carburant du réservoir (2) vers l'unité de dosage (6) ;
- un canal de recirculation (60) d'un second flux de carburant (F2), correspondant à une quantité de carburant excédentaire provenant de l'unité de dosage (6), en amont de la pompe d'alimentation (5) ;
- les canaux d'alimentation et de recirculation (20, 60) débouchant suivant des directions (D1, D2) différentes en amont de la pompe d'alimentation (5) ;
**caractérisé en ce que** le circuit (1) comprend un dispositif de distribution (8) d'au moins un des flux de carburant (F1, F2) qui comporte un conduit (800) interne d'écoulement du premier flux de carburant (F1), une gorge annulaire (820) externe d'écoulement du second flux de carburant (F2) et au moins un orifice (810) de passage du second flux (F2) qui est en communication fluidique avec la gorge annulaire (820), et **en ce que** ledit au moins un orifice (810) et ledit conduit (800) interne sont coaxiaux et débouchent respectivement en amont de la pompe d'alimentation (5).

2. Circuit (1) selon la revendication 1, **caractérisé en ce que** le dispositif de distribution (8) est monté dans un logement (10) agencé en amont de la pompe d'alimentation (5), et dans lequel ledit au moins un d'orifice (810) et ledit conduit (800) interne débouchent dans une zone de mélange (12) du logement (10).

3. Circuit (1) selon la revendication 1 ou 2, **caractérisé en ce que** le canal d'alimentation (20) débouche en aval dans le conduit (800) interne d'écoulement du dispositif de distribution (8) et le canal de recirculation (60) débouche dans la gorge annulaire (820) du dispositif de distribution (8).

4. Circuit (1) selon la revendication 2, **caractérisé en ce que** les canaux d'alimentation et de recirculation (20, 60) sont configurés pour déboucher de manière sécante dans le logement (10), dans lequel une extrémité aval (22) du canal d'alimentation (20) débouche dans le conduit (800) interne et une extrémité amont (62) du canal de recirculation (60) débouche dans la gorge annulaire (820) externe.

5. Circuit (1) selon la revendication 4, **caractérisé en ce que** l'extrémité aval (22) du canal d'alimentation (20) débouchant dans le conduit (800) interne d'écoulement, s'étend sensiblement de façon axiale ou inclinée par rapport à l'axe (A).

6. Circuit (1) selon la revendication 4, **caractérisé en ce que** l'extrémité amont (62) de canal de recirculation (60) débouchant dans la gorge annulaire (820), s'étend sensiblement perpendiculaire ou inclinée par rapport à l'axe (A).

7. Circuit (1) selon l'une des revendications 1 à 6, **caractérisé en ce que** le dispositif de distribution (8) comprend un corps principal (80) de révolution s'étendant autour d'un axe longitudinal (A) et comportant :
- le conduit (800) interne d'écoulement du premier flux de carburant (F1) qui s'étend à travers le corps principal (80) suivant l'axe (A), et
- une première portion annulaire (81) configurée pour former un passage de sortie d'un second flux de carburant (F2), et la première portion annulaire (81) comportant ledit au moins un orifice (810) de passage du second flux de carburant (F2) qui est répartie selon une rangée annulaire d'orifices (810) autour de l'axe (A).

8. Circuit (1) selon la revendication 7, **caractérisé en ce que** chaque orifice (810) s'étend suivant un axe parallèle à l'axe (A) du conduit (800) interne.

9. Circuit (1) selon l'une des revendications 1 à 8, **caractérisé en ce que** ledit conduit (800) interne d'écoulement et ledit au moins un orifice (810) sont configurés pour déboucher de manière transversale à un axe (B) autour duquel s'étend la pompe d'alimentation (5).

10. Circuit (1) selon l'une des revendications 7 à 9, **caractérisé en ce que** le corps principal (80) comprend en outre une seconde portion annulaire (83) configurée pour former un passage d'entrée du premier flux de carburant (F1) à travers le conduit (800) interne, la seconde portion (83) est reliée à la première portion (81) via une portion intermédiaire (82) délimitant au moins en partie l'ouverture centrale.

11. Circuit (1) selon la revendication 10, **caractérisé en ce que** la seconde portion (83) comprend en outre au moins une rainure annulaire d'étanchéité et de fixation (85) configurée pour le montage d'un élément d'étanchéité (850).

12. Circuit (1) selon l'une des revendications 1 à 11, **caractérisé en ce que** la pompe d'alimentation (3, 5) est une pompe basse pression (3), par exemple de type rotodynamique, et/ou une pompe haute pression (5), par exemple de type volumétrique à engrenages.

13. Circuit (1) selon la revendication 12, **caractérisé en ce que** le logement (10) et la zone de mélange (12) sont agencés en amont de la pompe haute pression (5).

14. Circuit (1) selon l'une des revendications 1 à 13, **caractérisé en ce que** le conduit (800) interne d'écoulement du premier flux de carburant (F1) est formé par une ouverture centrale.

15. Turbomachine (100) d'aéronef, comprenant un circuit d'alimentation en carburant (1) selon l'une des revendications 1 à 14, pour une chambre de combustion (9) de la turbomachine (100).

## Patentansprüche

1. Kraftstoffversorgungsschaltung (1) für eine Brennkammer (9) einer Turbomaschine (100), insbesondere eines Luftfahrzeugs, umfassend:
- einen Versorgungskanal (20), der für die Zirkulation einer ersten Kraftstoffströmung (F1) aus einem Kraftstofftank (2) konfiguriert ist;
- eine Dosiereinheit (6), die zum Abgeben eines vorbestimmten Kraftstoffdurchsatzes in die Brennkammer (9) konfiguriert ist;
- mindestens eine Versorgungspumpe (3, 5), die dazu vorgesehen ist, den Kraftstoff vom Tank (2) zur Dosiereinheit (6) zirkulieren zu lassen;
- einen Rezirkulationskanal (60) einer zweiten Kraftstoffströmung (F2), die einer überschüssigen Kraftstoffmenge aus der Dosiereinheit (6) entspricht, stromaufwärts der Versorgungspumpe (5);
- wobei der Versorgungs- und der Rezirkulationskanal (20, 60) entlang unterschiedlicher Richtungen (D1, D2) stromaufwärts der Versorgungspumpe (5) führen;
**dadurch gekennzeichnet, dass** die Schaltung (1) eine Verteilungsvorrichtung (8) mindestens einer der Kraftstoffströmungen (F1, F2) umfasst, die eine innere Abflussleitung (800) der ersten Kraftstoffströmung (F1), eine äußere ringförmige Abflussverengung (820) der zweiten Kraftstoffströmung (F2) und mindestens eine Durchgangsaussparung (810) der zweiten Strömung (F2), die mit der ringförmigen Verengung (820) in strömungstechnischer Kommunikation steht, umfasst, und dadurch, dass die mindestens eine Aussparung (810) und die innere Leitung (800) koaxial sind und jeweils stromaufwärts der Versorgungspumpe (5) führen.

2. Schaltung (1) nach Anspruch 1, **dadurch gekennzeichnet, dass** die Verteilungsvorrichtung (8) in einer Aufnahme (10) untergebracht ist, die stromaufwärts der Versorgungspumpe (5) eingerichtet ist, und wobei die mindestens eine Aussparung (810) und die innere Leitung (800) in einen Mischungsbereich (12) der Aufnahme (10) führen.

3. Schaltung (1) nach Anspruch 1 oder 2, **dadurch gekennzeichnet, dass** der Versorgungskanal (20) stromabwärts in die innere Abflussleitung (800) der Verteilungsvorrichtung (8) führt und der Rezirkulationskanal (60) in die ringförmige Verengung (820) der Verteilungsvorrichtung (8) führt.

4. Schaltung (1) nach Anspruch 2, **dadurch gekennzeichnet, dass** der Versorgungsund der Rezirkulationskanal (20, 60) konfiguriert sind, um auf schneidende Weise in die Aufnahme (10) führen, wobei ein stromabwärtiges Ende (22) des Versorgungskanals (20) in die innere Leitung (800) führt und ein stromaufwärtiges Ende (62) des Rezirkulationskanals (60) in die äußere ringförmige Verengung (820) führt.

5. Schaltung (1) nach Anspruch 4, **dadurch gekennzeichnet, dass** das stromabwärtige Ende (22) des Versorgungskanals (20), das in die innere Abflussleitung (800) führt, sich im Wesentlichen axial oder geneigt zur Achse (A) erstreckt.

6. Schaltung (1) nach Anspruch 4, **dadurch gekennzeichnet, dass** das stromaufwärtige Ende (62) des Rezirkulationskanals (60), das in die ringförmige Verengung (820) führt, sich im Wesentlichen senkrecht oder geneigt zur Achse (A) erstreckt.

7. Schaltung (1) nach einem der Ansprüche 1 bis 6, **dadurch gekennzeichnet, dass** die Verteilungsvorrichtung (8) einen Hauptdrehkörper (80) umfasst, der sich um eine Längsachse (A) erstreckt und Folgendes umfasst:
- die innere Abflussleitung (800) der ersten Kraftstoffströmung (F1), die sich durch den Hauptkörper (80) hindurch entlang der Achse (A) erstreckt; und
- einen ersten ringförmigen Abschnitt (81), der konfiguriert ist, um einen Ausgangsdurchgang einer zweiten Kraftstoffströmung (F2) zu bilden, und wobei der erste ringförmige Abschnitt (81) die mindestens eine Durchgangsaussparung (810) der zweiten Kraftstoffströmung (F2) umfasst, der in einer Reihe von ringförmigen Aussparungen (810) um die Achse (A) verteilt ist.

8. Schaltung (1) nach Anspruch 7, **dadurch gekennzeichnet, dass** sich jede Aussparung (810) entlang einer zur Achse (A) der inneren Leitung (800) parallelen Achse erstreckt.

9. Schaltung (1) nach einem der Ansprüche 1 bis 8, **dadurch gekennzeichnet, dass** die innere Abflussleitung (800) und die mindestens eine Aussparung (810) konfiguriert sind, um auf querverlaufende Weise zu einer Achse (B) zu führen, um die sich die Versorgungspumpe (5) erstreckt.

10. Schaltung (1) nach einem der Ansprüche 7 bis 9, **dadurch gekennzeichnet, dass** der Hauptkörper (80) weiter einen zweiten ringförmigen Abschnitt (83) umfasst, der konfiguriert ist, um einen Eingangsdurchgang der ersten Kraftstoffströmung (F1) durch die innere Leitung (800) hindurch zu bilden, wobei der zweite Abschnitt (83) über einen Zwischenabschnitt (82), der mindestens teilweise die mittlere Öffnung begrenzt, mit dem ersten Abschnitt (81) verbunden ist.

11. Schaltung (1) nach Anspruch 10, **dadurch gekennzeichnet, dass** der zweite Abschnitt (83) weiter mindestens eine ringförmige Dichtungs- und Befestigungsnut (85) umfasst, die für das Anbringen eines Dichtungselements (850) konfiguriert ist.

12. Schaltung (1) nach einem der Ansprüche 1 bis 11, **dadurch gekennzeichnet, dass** die Versorgungspumpe (3, 5) eine Niederdruckpumpe (3), zum Beispiel vom rotodynamischen Typ, und/oder eine Hochdruckpumpe (5), zum Beispiel vom volumetrischen Zahnradtyp, ist.

13. Schaltung (1) nach Anspruch 12, **dadurch gekennzeichnet, dass** die Aufnahme (10) und der Mischungsbereich (12) stromaufwärts der Hochdruckpumpe (5) eingerichtet sind.

14. Schaltung (1) nach einem der Ansprüche 1 bis 13, **dadurch gekennzeichnet, dass** die innere Abflussleitung (800) der ersten Kraftstoffströmung (F1) durch eine mittlere Öffnung gebildet ist.

15. Turbomaschine (100) eines Luftfahrzeugs, umfassend eine Kraftstoffversorgungsschaltung (1) nach einem der Ansprüche 1 bis 14 für eine Brennkammer (9) der Turbomaschine (100).

## Claims

1. A fuel supply circuit (1) for a combustion chamber (9) of a turbomachine (100), in particular an aircraft, comprising:
- a supply channel (20) configured for the circulation of a first fuel flow (F1) from a fuel tank (2);
- a metering unit (6) configured to provide a predetermined flow rate of fuel into the combustion chamber (9);
- at least one supply pump (3, 5) for circulating the fuel from the tank (2) towards the metering unit (6);
- a recirculation channel (60) for a second fuel flow (F2), corresponding to a quantity of excess fuel from the metering unit (6), upstream of the supply pump (5);
- the supply and recirculation channels (20, 60) opening in different directions (D1, D2) upstream of the supply pump (5);
**characterised in that** the circuit (1) comprises a distribution device (8) of at least one of the fuel flows (F1, F2) which comprises an internal conduit (800) for the flow of the first fuel flow (F1), an external annular gorge (820) for the flow of the second fuel flow (F2) and at least one orifice (810) for the passage of the second flow (F2) which is in fluidic communication with the annular gorge (820), and **in that** said at least one orifice (810) and said internal conduit (800) are coaxial and open respectively upstream of the supply pump (5).

2. The circuit (1) according to claim 1, **characterised in that** the distribution device (8) is mounted in a housing (10) arranged upstream of the supply pump (5), and in which said at least one orifice (810) and said internal conduit (800) open into a mixing area (12) of the housing (10).

3. The circuit (1) according to claim 1 or 2, **characterised in that** the supply channel (20) opens downstream into the internal conduit (800) for the flow of the distribution device (8) and the recirculation channel (60) opens into the annular gorge (820) of the distribution device (8).

4. The circuit (1) according to claim 2, **characterised in that** the supply and recirculation channels (20, 60) are configured to open in a secant manner into the housing (10), wherein a downstream end (22) of the supply channel (20) opens into the internal conduit (800) and an upstream end (62) of the recirculation channel (60) opens into the external annular gorge (820).

5. The circuit (1) according to claim 4, **characterised in that** the downstream end (22) of the supply channel (20) opening into the internal conduit (800) for the flow extends substantially axially or inclined with respect to the axis (A).

6. The circuit (1) according to claim 4, **characterised in that** the upstream end (62) of the recirculation channel (60) opening into the annular gorge (820) extends substantially perpendicularly or inclined with respect to the axis (A).

7. The circuit (1) according to one of claims 1 to 6, **characterised in that** the distribution device (8) comprises a main body (80) of revolution extending about a longitudinal axis (A) and comprising:
- the internal conduit (800) for the flow of the first fuel flow (F1) which extends through the main body (80) along the axis (A), and
- a first annular portion (81) configured to form an outlet passage for a second fuel flow (F2), and the first annular portion (81) comprising said at least one orifice (810) for the passage of the second fuel flow (F2) which is distributed in an annular row of orifices (810) around the axis (A).

8. The circuit (1) of claim 7, **characterised in that** each orifice (810) extends along an axis parallel to the axis (A) of the internal conduit (800).

9. The circuit (1) according to any of claims 1 to 8, **characterised in that** said internal conduit (800) for the flow and said at least one orifice (810) are configured to open in a transversal manner to an axis (B) about which the supply pump (5) extends.

10. The circuit (1) according to one of claims 7 to 9, **characterised in that** the main body (80) further comprises a second annular portion (83) configured to form an inlet passage for the first fuel flow (F1) through the internal conduit (800), the second portion (83) is connected to the first portion (81) via an intermediate portion (82) delimiting at least partly the central opening.

11. The circuit (1) of claim 10, **characterised in that** the second portion (83) further comprises at least one annular sealing and attaching groove (85) configured for mounting a sealing element (850).

12. The circuit (1) according to any of claims 1 to 11, **characterised in that** the supply pump (3, 5) is a low pressure pump (3), e.g. of the rotodynamic type, and/or a high pressure pump (5), e.g. of the volumetric gear type.

13. The circuit (1) according to claim 12, **characterised in that** the housing (10) and the mixing area (12) are arranged upstream of the high pressure pump (5).

14. The circuit (1) according to one of claims 1 to 13, **characterised in that** the internal conduit (800) for the flow of the first fuel flow (F1) is formed by a central opening.

15. An aircraft turbomachine (100), comprising a fuel supply circuit (1) according to one of claims 1 to 14, for a combustion chamber (9) of the turbomachine (100).
